# EUROPÄISCHE PATENTSCHRIFT

(11) **EP 0 355 920 B1**
(45) Veröffentlichungstag und Bekanntmachung des Hinweises auf die Patenterteilung: **01.06.1994**
(21) Anmeldenummer: 89202101.5
(22) Anmeldetag: 17.08.1989
(51) Int. Cl.: G11B 7/08

(54) **Elektrodynamischer Aktuator für eine optische Einschreib- und Ausleseeinheit**
Electrodynamic actuator for an optical writing and reading assembly
Actuateur éléctrodynamique pour dispositif d'écriture et de lecture optique

(30) Priorität: 19.08.1988 DE 3828146
(43) Veröffentlichungstag der Anmeldung: 28.02.1990
(73) Patentinhaber: Philips Patentverwaltung GmbH, 22335 Hamburg (DE); Philips Electronics N.V., 5621 BA Eindhoven (NL)
(72) Erfinder: Meyer, Karl-Hanns, Dr. Ing., D-3100 Aachen (DE); Honds, Leo, D-5100 Aachen (DE)
(74) Vertreter: Kupfermann, Fritz-Joachim, Dipl.-Ing.

(56) Entgegenhaltungen:
- EP-A- 0 103 929
- EP-A- 0 144 445
- EP-A- 0 178 077
- PATENT ABSTRACTS OF JAPAN vol. 9, no. 217 (P-385)(1940) 04 September 1985,& JP-A-60 76039

## Beschreibung

Die Erfindung bezieht sich auf einen elektrodynamischen Aktuator für eine optische Einschreib- bzw. Ausleseeinheit, die gegenüber Signalspuren eines Speichermediums ausgerichtet wird, um einen gebündelten Lichtstrahl auf eine Arbeitsposition zu lenken, wobei
- die optische Einheit an einer bewegbaren Dauermagnetanordnung angeordnet ist, die mittels in ihrem Umfeld befindlicher, ortsfester Spulen in senkrecht zueinander verlaufenden Fokussier- und Radialrichtungen bewegt werden kann,
- die Magnetisierung der Dauermagnetanordnung derart gewählt ist, daß ihr magnetisches Feld im Bereich der ihr gegenüberliegenden Spulenteile sowohl eine x- als auch eine z-Komponente aufweist,
- die Dauermagnetanordnung mit der optischen Einheit im Magnetfeld der Spulen an den freien Enden von einseitig eingespannten Federstäben angeordnet ist,
- die Federstäbe der Dauermagnetanordnung senkrecht zur Fokussier- und Radialrichtung bewegbar tragen.

Elektrodynamische Aktuatoren dieser Art sind bekannt aus der Audio-, Video- und Daten-Technik. Ein gebündelter Lichtstrahl wird von eine Optik auf ein Speichermedium geleitet, das beispielsweise eine umlaufende Platte sein kann (DE-OS 28 10 616). In dieser DE-OS erfolgt mit Hilfe des Strahlenbündels zwar nur ein Auslesen; es ist aber ebensogut ein Einschreiben möglich, wie es aus der DE-OS 16 13 987 bekannt ist. Sowohl beim Eischreiben als auch beim Auslesen ist es erforderlich, den Laserstrahl zunächst einmal mittels einer elektromechanischen Stellvorrichtung in die Einschreib- bzw. Auslese-Arbeitsposition zu bringen und in dieser Position dann das Objektiv mittels eines Aktuators auf die genau einzuschreibende oder auszulesende Stelle zu fokussieren.

Es ist aus der DE-PS 32 34 288 (PHD 82-089) ein elektrodynamischer Aktuator bekannt, bei dem die Optik schwimmend in einem Magnetsystem gelagert ist. Weiterhin ist aus der EP-A-144 445 ein Aktuator mit beweglichen Spulen bekannt. Die Spulen haben flexible Zuleitungen. Die flexiblen Zuleitungen sind aufwendig und können störend auf die Bewegungen des Aktuators wirken.

Aus der EP-A 0 178 077 ist ein dynamischer Aktuator für eine optische Aufnahme- und Wiedergabeeinheit bekannt, die zur Erzielung von Korrekturbewegungen zwischen Flach-Spulenteilen angeordnet ist, deren Achsen senkrecht zur Fokussierrichtung verlaufen. Die Einheit selbst ist zur Bewegung in Fokussierrichtung an vier Vierkant-Federstäben aufgehängt. Um eine Beweglichkeit auch in der Radialrichtung zu erreichen, ist die Einheit mit den vier in Fokussierrichtung biegbaren Vierkantfederstäben zusammen mit deren Einspannung zusätzlich noch einmal an vier nun aber in Radialrichtung biegsamen Vierkant-Federstäben aufgehängt.

Es ist Aufgabe der Erfindung, einen elektrodynamischen Aktuator zu schaffen, der aus wenigen, einfachen Teilen aufgebaut ist und der keine bewegten Stromzuführungen zu seinen Spulen aufweist.

Die gestellte Aufgabe ist erfindungsgemäß dadurch gelöst, daß in Radialrichtung beiderseits der bewegbaren Dauermagnetanordnung befindliche stationäre Spulen paarweise in in Radialrichtung verlaufenden Parallelebenen derart angeordnet sind, daß jeweils ein Leiter-(bündel-)stab jeder Spule in y-Richtung, d. h. senkrecht zur Fokussier- und Radialrichtung, benachbart zu der Dauermagnetanordnung verläuft, und daß nur ein Satz runder Federstäbe, die in einer Einspannung eingespannt sind, die die Einheit tragen.

Zum Aufhängen der Einheit werden nur vier runde Federstäbe benötigt, die an ihren Einspannstellen in einem verschieblichen Lager gehalten sind; sie können Fokuskorrekturen in Fokussierrichtung und Radialkorrekturen in Radialrichtung ausführen.

Jede Einzelspule bzw. ihr Leiterstab übt hierbei auf die Dauermagnetanordnung eine Kraft und ein Drehmoment aus, wobei beide im allgemeinen mehrere Komponenten haben. Eine beabsichtigte Bewegung der Dauermagnetanordnung in zwei senkrecht zueinander liegenden Richtungen (der Fokussierrichtung z und der Radialrichtung x) setzt zwei unabhängige Kräfte in diesen Richtungen voraus. Kraftkomponenten in anderen Richtungen und Drehmomente sollen nicht entstehen, da die mechanische Aufhängung an runden Federstäben zu viele Freiheitsgrade hat. Für die Erzeugung der Fokus- und Radialkraft sind in den Leiterstäben entsprechende Stromverteilungen einzustellen. Bei voneinander unabhängigen Spulenströmen kann der resultierende Kraftvektor dann entweder nur eine reine z-Komponente oder eine reine x-Komponente enthalten, wobei die resultierenden Drehmomente verschwinden. Ebenso sind beliebige Überlagerungen aus beiden Kräften realisierbar, wobei der Magnet simultan in beiden Richtungen bewegt wird.

Die beiden Hauptkomponenten, die Dauermagnetanordnung und die Spulenanordnung, sind unkompliziert und lassen sich wirtschaftlich herstellen.

Nach einer weiteren Ausgestaltung der Erfindung ist vorgesehen, daß die Leiterstäbe der Spulen und die Dauermagnetanordnung in y-Richtung etwa gleiche Längen aufweisen. Weiterhin ist es von Vorteil, wenn nach einer weiteren Ausgestaltung der Erfindung vorgesehen ist, daß die Leiterstäbe der Leiterstabpaare auf beiden Seiten des Dauermagnetanordnunguntereinander einen Abstand haben, der etwa so groß ist wie die Ausdehnung der Dauermagnetanordnung in y-Richtung und daß sich die Dauermagnetanordnung in ihrer Mittelstellung etwa innerhalb der Parallelebenen der Spulen auf Abstand zwischen den Leiterstäben befindet. Mit eine solchen Zuordnung von Leiterstäben und Dauermagnetanordnung lassen sich optimale Feldwirkungen zwischen Spulen und Dauermagnetanordnung erzielen.

Nach einer weiteren Ausgestaltung der Erfindung ist vorgesehen, daß die Dauermagnetanordnung aus einem Dauermagneten besteht, der in seinem Zentrum die in Z-Richtung orientierte optische Einheit trägt. Ebenso ist es möglich und vorteilhaft, die optische Einheit seitlich des Dauermagneten oder an einem zentralen Träger anzuordnen, der die in z-Richtung orientierte optische Einheit trägt und der seitlich gegenüber den Leiterstäben mit Dauermagneten versehen ist.

Nach einer weiteren Ausgestaltung der Erfindung ist vorgesehen, daß die Dauermagnetanordnung eine magnetische Vorzugsrichtung (anisotrop) in z-Richtung aufweist und in dieser Richtung magnetisiert ist. Ebenso kann die Ausgestaltung in vorteilhafter Weise so vorgesehen sein, daß die Dauermaganetanordnung eine magnetische Vorzugsrichtung (anisotrop) in x-Richtung aufweist und in dieser Richtung magnetisiert ist. Das Magnetfeld im Spulenbereich wird dadurch verstärkt.

Nach einer weiteren Ausgestaltung der Erfindung kann vorgesehen sein, daß das Magnetmaterial isotrop ist und dieses Material in z- oder x-Richtung magnetisiert ist. Derartige Magnetmaterialien sind wirtschaftlicher und gestatten eine wirtschaftliche Herstellung des Dauermagneten.

Nach einer weiteren Ausgestaltung der Erfindung ist vorgesehen, daß die Magnetisierung sowohl eine Z- als auch eine X-Komponente aufweist. Die Magnetisierung des Magneten ist dabei inhomogen und ermöglicht mehr Freizügigkeit bei der Aufteilung der Magnetfelder im Spulenbereich auf die x- und z-Komponente.

Nach einer weiteren Ausgestaltung der Erfindung ist vorgesehen, daß jedes der Spulenpaare in Form von flächenhaften Leitungszügen auf den beiden Oberflächen einer gedruckten Schaltungsplatte gebildet ist. Die Spulen lassen sich auf diese Weise wirtschaftlich fertigen und mit dem Träger des Dauermagneten verbinden.

Die Erfindung wird anhand der Zeichnung näher erläutert. Es zeigen:
Fig. 1 einen elektrodynamischen Aktuator für eine optische Einschreib- bzw. Ausleseeinheit mit einem beweglich angeordneten Magneten,
Fig. 2 eine andere Ausführung des Magneten in dem Aktuator nach Fig. 1,
Fig. 3 eine weitere andere Ausführung des Magneten in dem Aktuator nach Fig. 1.

An einem Träger 1, der beispielsweise über einen Schwenk-oder Tangentialarm über eine Speicherplatte hinweg bewegt werden kann, ist mit Hilfe von vier Federstäben 3 eine Magnetanordnung 5 in Form eines Dauermagneten aufgehängt. Der Dauermagnet 5 ist in Richtung eines Pfeiles 15, in der Fokussier- oder z-Richtung des Systems, gleichmäßig magnetisiert. Die Federstäbe 3 sind im Träger 1 eingespannt und halten den quaderförmigen Dauermagneten an seinen Längskanten 7 mit ihren freien Enden 8. Im Zentrum des Dauermagneten 5 befindet sich eine Bohrung 9, in die eine lichtoptische Einheit 11 eingesetzt ist, die in Fokussierrichtung von einem Lichtstrahl, beispielsweise einem gebündelten Laserstrahl 13, durchstrahlt wird. Das Magnetmaterial kann anisotrop oder isotrop (ohne magnetische Vorzugsrichtung) ausgebildet sein. Abweichend von der Darstellung der Magnetisierung in der Zeichnung kann die Magnetisierung auch in x-Richtung gewählt sein. Denkbar ist bei isotropem Material auch eine gewünschte Magnetisierung in z- und x-Richtung oder mit Komponenten in diesen Richtungen. Der Dauermagnet 5 kann in der beschriebenen Aufhängung Bewegungen ausführen in Fokussierrichtung z, in Radialrichtung x und in kombinierten Richtungen. Die z-Richtung verläuft senkrecht zum nicht dargestellten Speichermedium, auf dessen Spuren der Lichtstrahl 13 fokussiert wird, und die Radialrichtung x ist die Richtung, in der eine Radialkompensation der lichtoptischen Einheit 11 durchführbar ist, damit der Lichtstrahl die gewünschte Spur des Speichermediums genau abfahren kann und nicht verläßt. Die y-Richtung, in der die Federstäbe verlaufen, ist die Richtung, die senkrecht zur x- und z-Richtung verläuft.

Zur Bewegung des Dauermagneten 5 in der z- und x-Richtung sind zwei Spulenpaare 17 und 19 vorgesehen. Diese Spulenpaare 19 fallen in Ebenen 20, 21, die in x-y-Richtung verlaufen und einen Abstand 22 haben, der etwa der Höhe h des Dauermagneten 5 entspricht. Ein einfacher Aufbau der Spulenpaare 17 und 19 läßt sich erreichen, indem die Spulen mit einer und mehreren Windungen auf der Oberseite 23 oder Unterseite 24 von gedruckten Schaltungsplatten vorgesehen sind. Diese gedruckten Schaltungsplatten 25 können mit dem Träger 1 im Bereich 23 verbunden sein.

Jede Spule 17a, 17b, 19a, 19b der Spulenpaare 17, 19 weist einen Leiterstab 17c, 17d bzw. 19c, 19d auf. Diese Leiterstäbe verlaufen in y-Richtung und auf Abstand von dem Dauermagneten 5. Die Leiterstäbe 17c, 17d und 19c, 19d haben eine Länge L, die der Länge des Dauermagneten 5 in y-Richtung in etwa entspricht. Der Dauermagnet 5 befindet sich in seiner Mittelstellung, wenn die Spulenpaare 17, 19 nicht erregt sind. Diese Mittelstellung liegt etwa innerhalb der Parallelebenen 20, 21 und etwa in der Mitte zwischen den Leiterstäben 17c, 17d bzw. 19c, 19d.

Mit diesem Aktuator lassen sich Magnetbewegungen und damit Bewegungen der optischen Einheit 11 herbeiführen in den beiden Richtungen x und z. Jede Einzelspule 17a, 17b, 19a, 19b übt auf den Magneten 7 eine Kraft und ein Drehmoment aus, wobei beide im allgemeinen mehrere Komponenten haben. Die beabsichtigte Bewegung in der z- und x-Richtung (2D-Bewegung) des Magneten in Fokus- und Radialrichtung setzt zwei unabhängige Kräfte in diesen Richtungen voraus. Kraftkomponenten in anderen Richtungen und Drehmomente sollen nach Möglichkeit nicht entstehen, da die mechanische Aufhängung an den Federstäben zu viele Freiheitsgrade hat. Für die Erzeugung der Fokus- und der Radialkraft müssen die Spulen einzeln gezielt angesteuert werden, um ein bestimmtes, auf den Magneten 5 einwirkendes Feld zu erhalten. Bei voneinander unabhängigen Spulenströmen kann der resultierende Kraftvektor dann entweder nur eine reine z-Komponente oder eine reine x-Komponente enthalten, wobei die resultierenden Drehmomente verschwinden. Ebenso sind aber beliebige Überlagerungen aus beiden Kräften realisierbar, womit der Magnet simultan in z- und x-Richtung bewegt wird.

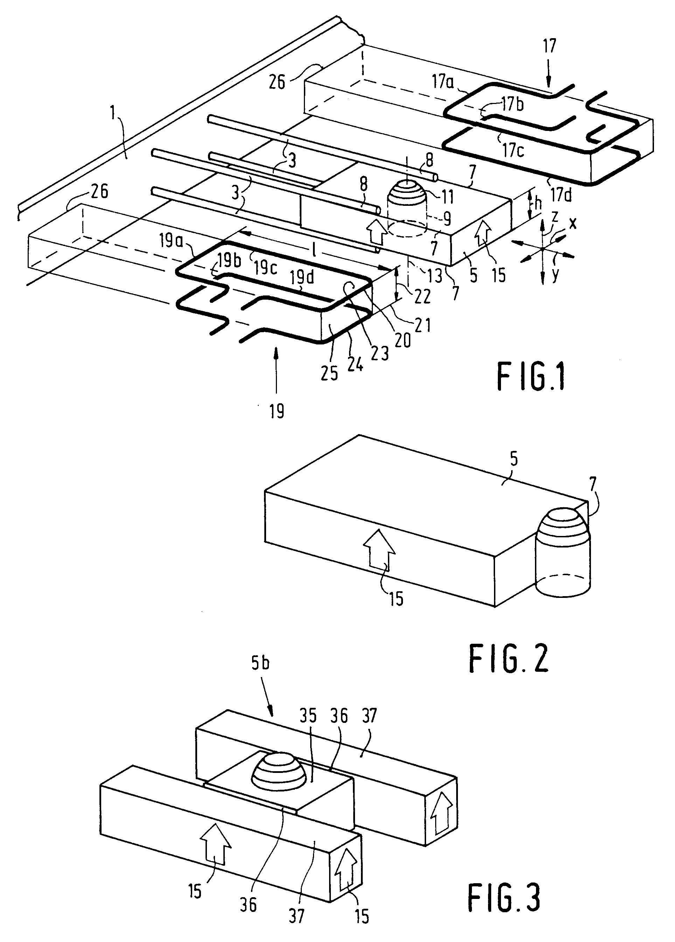

Fig. 2 zeigt eine abgewandelte Dauermagnetanordnung 5a, bei der die optische Einheit 11 seitlich des Dauermagneten angeordnet ist. Der Dauermagnet 5a ist wie in Fig. 1 in z-Richtung magnetisiert (Pfeil 15) und kann aus anisotropem oder isotropem Material bestehen. Abweichend von der Darstellung nach Fig. 2 kann die Magnetisierung auch in der x-Richtung verlaufen oder bei isotropem Material in der z- und x-Richtung verlaufen oder Komponenten in diesen Richtungen haben.

Fig. 3 zeigt eine weitere abgewandelte Dauermagnetanordnung 5b. Die Dauermagnetanordnung besteht dabei aus einem zentralen Träger 35, beispielsweise aus Kunststoff, der die in der z-Richtung orientierte optische Einheit trägt. Der Träger 35 ist auf seinen zu den Leiterstäben gelegenen Seiten 36 mit beispielsweise stabförmigen Dauermagneten 37 versehen. Die stabförmigen Dauermagnete 37 erstrecken sich parallel zu den Leiterstäben 17c, 17d, 19c, 19d. Die Dauermagnete 37 sind wie in Fig. 1 in z-Richtung magnetisiert (Pfeil 15) und können aus anisotropem oder isotropem Material bestehen. Abweichend von der Darstellung in Fig. 3 können die Magnetisierungen auch in x-Richtung verlaufen oder bei isotropem Material in der z- und x-Richtung verlaufen oder Komponenten in diesen Richtungen haben.

## Patentansprüche

1. Elektrodynamischer Aktuator für eine optische Einschreib- bzw. Ausleseeinheit (11), die gegenüber Signalspuren eines Speichermediums ausgerichtet wird, um einen gebündelten Lichtstrahl (13) auf eine Arbeitsposition zu lenken, wobei
- die optische Einheit (11) an einer bewegbaren Dauermagnetanordnung (5, 5a, 5b) angeordnet ist, die mittels in ihrem Umfeld befindlicher, ortsfester Spulen (17a, 17b, 19a, 19b) in senkrecht zueinander verlaufenden Fokussier- (z) und Radialrichtungen (x) bewegt werden kann,
- die Magnetisierung der Dauermagnetanordnung derart gewählt ist, daß ihr magnetisches Feld im Bereich der ihr gegenüberliegenden Spulenteile (17c, 17d, 19c, 19d) sowohl eine x- als auch eine z-Komponente aufweist,
- die Dauermagnetanordnung (5, 5a, 5b) mit der optischen Einheit (11) im Magnetfeld der Spulen an den freien Enden von einseitig eingespannten Federstäben (3) angeordnet ist,
- die Federstäbe (3) der Dauermagnetanordnung (5, 5a, 5b) senkrecht zur Fokussier- und Radialrichtung bewegbar tragen,
dadurch gekennzeichnet, daß in Radialrichtung (x) beiderseits der bewegbaren Dauermagnetanordnung (5, 5a, 5b) befindliche stationäre Spulen (17a, 17b, 18a, 18b) paarweise in in Radialrichtung (x) verlaufenden Parallelebenen (20, 21) derart angeordnet sind, daß jeweils ein Leiter-(bündel-)stab (17c, 17d; 19c, 19d) jeder Spule (17a, 17b, 19a, 19b) in y-Richtung, d. h. senkrecht zur Fokussier- und Radialrichtung, benachbart zu der Dauermagnetanordnung (5, 5a, 5b) verläuft, und daß nur ein Satz runder Federstäbe (3), die in einer Einspannung (1) eingespannt sind, die die Einheit tragen..

2. Elektrodynamischer Aktuator nach Anspruch 1, dadurch gekennzeichnet, daß die Leiterstäbe (17c, 17d, 19c, 19d) der Spulen (17a, 17b, 19a, 9b) und die Dauermagnetanordnung (5, 5a, 5b) in y-Richtung etwa gleiche Längen aufweisen.

3. Elektrodynamischer Aktuator nach Anspruch 1, dadurch gekennzeichnet, daß die Leiterstäbe (17c, 17d, 19c, 19d) der Leiterstabpaare auf beiden Seiten der Dauermagnetanordnung (5, 5a, 5b) untereinander einen Abstand haben, der etwa so groß ist wie die Ausdehnung der Dauermagnetanordnung (5, 5a, 5b) in z-Richtung und daß sich die Dauermagnetanordnung (5, 5a, 5b) in ihrer Mittelstellung etwa innerhalb der Parallelebenen (20, 21) der Spulen (17, 19) auf Abstand zwischen den Leiterstäben (17c, 17d, 19c, 19d) befindet.

4. Elektrodynamischer Aktuator nach Anspruch 1, dadurch gekennzeichnet, daß die Dauermagnetanordnung (5) aus einem Dauermagneten besteht, der in seinem Zentrum die in z-Richtung orientierte optische Einheit (11) trägt (Fig. 1).

5. Elektrodynamischer Aktuator nach Anspruch 1, dadurch gekennzeichnet, daß die Dauermagnetanordnung (5a) aus einem Dauermagneten besteht, der seitlich die in z-Richtung orientierte optische Einheit (11) trägt (Fig. 2).

6. Elektrodynamischer Aktuator nach Anspruch 1, dadurch gekennzeichnet, daß die Dauermagnetanordnung (5b) aus einem zentralen Träger (35) besteht, der die in z-Richtung orientierte optische Einheit (11) trägt und der seitlich gegenüber den Leiterstäben (17c, 17d, 19c, 19d) mit Dauermagneten (37) versehen ist (Fig. 3).

7. Elektrodynamischer Aktuator nach Anspruch 1, dadurch gekennzeichnet, daß die Dauermagnetanordnung (5, 5a, 5b) eine magnetische Vorzugsrichtung (anisotrop) in z-Richtung aufweist und in dieser Richtung magnetisiert ist.

8. Elektrodynamischer Aktuator nach Anspruch 1, dadurch gekennzeichnet, daß die Dauermagnetanordnung (5, 5a, 5b) eine magnetische Vorzugsrichtung (anisotrop) in x-Richtung aufweist und in dieser Richtung magnetisiert ist.

9. Elektrodynamischer Aktuator nach Anspruch 1, dadurch gekennzeichnet, daß das Magnetmaterial isotrop ist und dieses Material in z- und x-Richtung magnetisiert ist.

10. Elektrodynamischer Aktuator nach Anspruch 9, dadurch gekennzeichnet, daß die Magnetisierung sowohl eine z- als auch eine x-Komponente aufweist.

11. Elektrodynamischer Aktuator nach Anspruch 1, dadurch gekennzeichnet, daß jedes der Spulenpaare (17. 19) in Form von flächenhaften Leitungszügen auf den beiden Oberflächen (23, 24) einer gedruckten Schaltungsplatte (25) gebildet ist.

## Claims

1. An electrodynamic actuator for an optical write and/or read unit (11), which is aligned with respect to signal tracks of a storage medium in order to direct a focused light beam (13) onto an operating position,
- the optical unit (11) being situated on a movable permanent magnet arrangement (5, 5a, 5b) which can be moved in focusing (z) ad radial (x) directions which are perpendicular to one another by means of stationary coils (17a, 17b, 19a, 19b) disposed in its vicinity,
- the magnetization of the permanent magnet arrangement being chosen in such a way that its magnetic field in the area of coil portions (17c, 17d, 19c, 19d) facing said permanent magnet arrangement has both an x component and a z component,
- the permanent magnet arrangement (5, 5a, 5b) with the optical unit (11) being arranged in the magnetic field of the coils on free end portions of cantilevered spring members (3),
- the permanent magnet arrangement (5, 5a, 5b) being supported by the spring members (3) so as to be movable perpendicularly to the focusing direction and the radial direction,
characterised in that the stationary coils (17a, 17b, 18a, 18b), which are disposed on both sides of the movable permanent magnet arrangement (5, 5a, 5b) in the radial direction (x), are arranged in pairs in parallel planes (20, 21) which extend in the radial direction (x) in such a way that in each case one (multi-)conductor rod (17c, 17d; 19c, 19d) of each coil (17a, 17b, 19a, 19b) extends adjacent to the permanent magnet arrangement (5, 5a, 5b) in the y direction, *i.e.* perpendicularly to the focusing and the radial direction, and the unit (1) is supported by only one set of round spring members (3) which are fixed in a support (1).

2. An electrodynamic actuator as claimed in Claim 1, characterised in that the conductor rods (17c, 17d, 19c, 19d) of the coils (17a, 17b, 19a, 19b) and the permanent magnet arrangement (5, 5a, 5b) have approximately equal lengths in the y direction.

3. An electrodynamic actuator as claimed in Claim 1, characterized in that the conductor rods (17c, 17d, 19c, 19d) of the pairs of conductor rods on both sides of the permanent magnet arrangement (5, 5a, 5b) have a distance relative to one another which is substantially equal to the dimension of the permanent magnet arrangement (5, 5a, 5b) in the z direction, and in its centre position the permanent magnet arrangement (5, 5a, 5b) is disposed substantially within the parallel planes (20, 21) of the coils (17, 19) and disposed between and spaced from the conductor rods (17c, 17d, 19c, 19d).

4. An electrodynamic actuator as claimed in Claim 1, characterised in that the permanent magnet arrangement (5) comprises a permanent magnet carrying in its centre the optical unit (11), which is oriented in the z direction (Fig. 1).

5. An electrodynamic actuator as claimed in Claim 1, characterised in that the permanent magnet arrangement (5a) comprises a permanent magnet which laterally carries the optical unit (11), which is oriented in the z direction (Figure 2).

6. An electrodynamic actuator as claimed in Claim 1, characterised in that the permanent magnet arrangement (5b) comprises a central support (35) carrying the optical unit (11), which is oriented in the z direction, and provided with permanent magnets (37) at its sides which face the conductor rods (17c, 17d, 19c, 19d) (Fig. 3).

7. An electrodynamic actuator as claimed in Claim 1, characterised in that the permanent magnet arrangement (5, 5a, 5b) has a preferred magnetic direction (anisotropic) in the z direction, and is magnetized in this direction.

8. An electrodynamic actuator as claimed in Claim 1, characterised in that the permanent magnet arrangement (5, 5a, 5b) has a preferred magnetic direction (anisotropic) in the x direction, and is magnetized in this direction.

9. An electrodynamic actuator as claimed in Claim 1, characterised in that the magnet material is isotropic, and this material is magnetized in the z and the x direction.

10. An electrodynamic actuator as claimed in Claim 9, characterised in that the magnetization has both a z and an x component.

11. An electrodynamic actuator as claimed in Claim 1, characterised in that each of the pairs of coils (17, 19) is formed by flat conductor tracks on the two surfaces (23, 24) of a printed circuit board (25).

## Revendications

1. Actionneur électrodynamique pour une unité d'écriture/lecture (11) qui est alignée par rapport à des pistes de signal d'un support de mémorisation pour diriger vers une position de fonctionnement un faisceau lumineux focalisé (13),
- l'unité optique (11) étant disposée sur un agencement magnétique permanent mobile (5, 5a, 5b) qui, à l'aide de bobines stationnaires (17a, 17b, 19a, 19b) situées dans son voisinage, peut être déplacé dans une direction de focalisation (z) et une direction radiale (x) perpendiculaires l'une à l'autre,
- l'aimantation de l'agencement magnétique permanent étant choisie de façon que son champ magnétique, au niveau des parties de bobine (17c, 17d, 19c, 19d) situées en regard de cet agencement, présente une composante x ainsi qu'une composante z,
- l'ensemble de l'agencement magnétique permanent (5, 5a, 5b) et de l'unité optique (11), dans le champ magnétique des bobines, est disposé aux extrémités libres de ressorts-barres (3) serrés d'un côté,
- l'agencement magnétique permanent (5a, 5b) étant appuyé sur les ressorts-barres (3) de façon à pouvoir être déplacé perpendiculairement à la direction de focalisation et à la direction radiale,
caractérisé en ce que des bobines stationnaires (17a, 17b, 18a, 18b) situées, dans la direction radiale (x) de part et d'autre de l'agencement mobile d'aimants permanents (5, 5a, 5b) sont disposées paire par paire dans des plans parallèles (20, 21) s'étendant dans la direction radiale, de telle manière qu'une barre de conducteurs (de faisceaux de conducteurs) (17, 17b, 19a, 19b) de chaque bobine (17c, 17d; 19c, 19d), vue dans la direction y, c'est-à-dire perpendiculairement à la direction de focalisation et à la direction radiale, s'étend à proximité de l'agencement magnétique permanent (5, 5a, 5b), et en ce que l'unité n'est supportée que par un seul jeu de ressorts-barres ronds (3) serrés dans un dispositif de serrage (1).

2. Actionneur électrodynamique selon la revendication 1, caractérisé en ce que les barres de conducteurs (17c, 17d, 19c, 19d) des bobines (17a, 17b, 19a, 19b) et l'agencement magnétique permanent (5, 5a, 5b) ont à peu près la même longueur dans la direction y.

3. Actionneur électrodynamique selon la revendication 1, caractérisé en ce que (17c, 17d, 19c, 19d) les barres de conducteurs des paires de barres de conducteurs de part et d'autre de l'agencement magnétique permanent (5, 5a, 5b) sont séparées par une distance à peu près égale à la dimension de l'agencement magnétique permanent (5, 5a, 5b), mesurée dans la direction z et en ce que l'agencement magnétique permanent (5, 5a, 5b), dans sa position centrale, est situé à peu près dans les plans parallèles (20, 21) des bobines (17, 19) et à distance entre les barres de conducteurs (17c, 17d, 19c, 19d).

4. Actionneur électrodynamique selon la revendication 1, caractérisé en ce que l'agencement magnétique permanent (5) est constitué par un aimant permanent portant dans son centre l'unité optique (11) orientée dans la direction z (figure 1).

5. Actionneur électrodynamique selon la revendication 1, caractérisé en ce que l'agencement magnétique permanent (5) est constitué par un aimant permanent portant latéralement l'unité optique (11) orientée dans la direction z (figure 2).

6. Actionneur électrodynamique selon la revendication 1, caractérisé en ce que l'agencement magnétique permanent (5b) est constitué par un support central (35) portant l'unité optique (11) orientée dans la direction z et qui, latéralement, en regard des barres de conducteurs (17c, 17d, 19c, 19d) est muni d'aimants permanents (37) (figure 3).

7. Actionneur électrodynamique selon la revendication 1, caractérisé en ce que l'agencement magnétique permanent (5, 5a, 5b) présente une direction magnétique préférentielle anisotrope dans la direction z et en ce qu'il est aimanté dans cette direction.

8. Actionneur électrodynamique selon la revendication 1, caractérisé en ce que l'agencement magnétique permanent (5, 5a, 5b) présente une direction magnétique préférentielle (anisotrope) dans la direction x et en ce qu'il est aimanté dans cette direction.

9. Actionneur électrodynamique selon la revendication 1, caractérisé en ce que le matériau magnétique est isotrope et en ce que ce matériau est aimanté dans la direction z ou x.

10. Actionneur électrodynamique selon la revendication 9, caractérise en ce que l'aimantation présente une composante z ainsi qu'une composante x.

11. Actionneur électrodynamique selon la revendication 1, caractérisé en ce qu'il est prévu que chacune des paires de bobines (17, 19) est réalisée sous la forme de pistes conductrices sur les deux faces d'une plaque de circuit imprimé.
